# EUROPEAN PATENT APPLICATION

(11) **EP 4 518 079 A1**
(43) Date of publication of application: **05.03.2025**
(21) Application number: 22947201.4
(22) Date of filing: 21.06.2022
(51) Int. Cl.: H02J 7/00, H02J 3/32

(54) **DOMAIN CONTROLLER, ENERGY STORAGE SYSTEM, AND CONTROL METHOD FOR ENERGY STORAGE SYSTEM**

(71) Applicant: Contemporary Amperex Technology Co., Limited, Ningde, Fujian 352100 (CN)
(72) Inventor: ZUO, Xiyang, Ningde, Fujian 352100 (CN); LI, Zhonghong, Ningde, Fujian 352100 (CN); XU, Jinmei, Ningde, Fujian 352100 (CN); YU, Cigong, Ningde, Fujian 352100 (CN); LUO, Guangsheng, Ningde, Fujian 352100 (CN); WU, Kai, Ningde, Fujian 352100 (CN)
(74) Representative: Gong, Jinping
(86) International application number: PCT/CN2022/100146
(87) International publication number: WO 2023/245421

(57) **Abstract**

The embodiments of the present application provide a domain controller for an energy storage system, the energy storage system includes an energy storage unit and a non-energy storage unit, the non-energy storage unit is configured to assist the energy storage unit; the domain controller integrates a management module of the energy storage unit and a management module of the non-energy storage unit for managing the energy storage unit and the non-energy storage unit. According to the technical solution of the present application, it is possible to intelligently adjust the management strategy of the energy storage system and achieves the efficient and energy-saving management of the energy storage system.

## Description

### TECHNOLOGY FIELD

The present application relates to the technical field of energy storage, in particular to a domain controller, an energy storage system and a control method of the energy storage system.

### BACKGROUND

Based on the national power reform and the large increase in the installed capacity of renewable energy generation, energy storage technology will play an important role in the five links of power system: generation, transmission, transformation, distribution and use. Battery energy storage system is widely used in new energy, smart grid, energy-saving technology and other fields.

With the development of energy storage industry, the working efficiency, safety performance and cycle life of battery energy storage system are the focus of attention. How to manage the battery energy storage system reasonably and improve the performance of the battery energy storage system is an urgent problem to be solved at present.

### SUMMARY

The present application provides a domain controller, an energy storage system and a control method of the energy storage system, which can intelligently adjust the management strategy of the energy storage system and achieve efficient and energy-saving management of the energy storage system.

In the first aspect, provided is a domain controller for an energy storage system, the energy storage system includes an energy storage unit and a non-energy storage unit, the non-energy storage unit is configured to assist the energy storage unit; the domain controller integrates a management module of the energy storage unit and a management module of the non-energy storage unit for managing the energy storage unit and the non-energy storage unit.

In the embodiments of the present application, the management module of the energy storage unit and the management module of the non-energy storage unit are integrated into the domain controller. Compared with the existing solution in which the management module of the energy storage unit and the management module of the non-energy storage unit of the energy storage system are distributed, the solution in the present application integrates the management module of the energy storage unit and the management module of the non-energy storage unit into the domain controller. The domain controller can centrally control the management module of the energy storage unit and the management module of the non-energy storage unit, so that the information interaction between the management module of the energy storage unit and the management module of the non-energy storage unit is smooth and rapid, the system management efficiency is improved, and the information of the management module of the energy storage unit and the management module of the non-energy storage unit can be integrated and processed, thus avoiding the waste of system resources caused by multiple information processing.

In a possible implementation, the management module of the energy storage unit comprises at least one of a battery management system (Battery Management System, BMS), a power conversion system (Power Convert System, PCS), and an energy management system (Energy Management System, EMS).

The battery management system (BMS), the power conversion system (PCS) and the energy management system (EMS) can manage and control the whole battery energy storage system according to the status information of the energy storage unit.

In a possible implementation, the management module of the energy storage unit comprises a plurality of control nodes, and the domain controller integrates the plurality of control nodes.

The domain controller integrates multiple control nodes of the management module of the energy storage unit, which can improve the integration level of the management module of the energy storage unit and reduce the hardware cost.

In a possible implementation, the non-energy storage unit comprises a thermal management unit or a fire fighting unit.

The thermal management unit and the fire fighting unit can carry out thermal management on the energy storage unit, cool it when the temperature of the energy storage unit is too high, and heat it when the temperature of the energy storage unit is too low.

In a possible implementation, the thermal management unit integrates a thermal management unit of the energy storage unit and a thermal management unit of the PCS.

The thermal management unit of the energy storage unit and the thermal management unit of PCS are integrated together, and energy conversion can be carried out between the two thermal management units to improve the energy utilization rate of the system.

In a possible implementation, the domain controller is configured to manage the non-energy storage unit according to status information of the energy storage unit.

The domain controller manages the non-energy storage unit according to the status information of the energy storage unit, so that the non-energy storage unit adjusts the operating condition of the energy storage unit to a desired operating condition.

In a possible implementation, the status information of the energy storage unit includes at least one of a temperature, a voltage, a state of charge (State of Charge, SOC), a state of health (State of Health, SOH), and a state of charging and discharging.

The temperature, voltage, state of charge (SOC), state of health (SOH) and state of charging and discharging of the energy storage unit are all status information related to the operating state of the energy storage unit. By acquiring these status information of the energy storage unit, it is possible to master the real-time operating conditions of the energy storage unit.

In a possible implementation mode, the domain controller is configured to: acquire an intelligent management strategy of the non-energy storage unit according to the status information of the energy storage unit; and manage the non-energy storage unit according to the intelligent management strategy.

The domain controller acquires the intelligent management strategy of the non-energy storage unit according to the status information of the energy storage unit, so that the domain controller can adjust the management strategy of the non-energy storage unit flexibly according to the status information of the energy storage unit, and manage the non-energy storage unit according to the intelligent management strategy in order to allow the non-energy storage unit to adjust the operating condition of the energy storage unit to the desired operating condition.

In a possible implementation, the intelligent management strategy is a management strategy associated with user usage behavior of the energy storage unit.

The Intelligent management strategy is associated with the user usage behavior of energy storage unit, which can efficiently manage non-energy storage unit and enable non-energy storage unit to adjust the operating condition of the energy storage unit to the desired operating condition.

In a possible implementation, the domain controller is configured to acquire the intelligent management strategy of the non-energy storage unit from the energy storage cloud server according to the status information of the energy storage unit.

The energy storage cloud server is simple, efficient, safe and reliable, and its processing capacity is flexible. The energy storage cloud server can store a large amount of information, and the information interaction of the energy storage system through the energy storage cloud server is efficient and rapid, thus improving the management efficiency of the system.

In a possible implementation mode, the domain controller is configured to: acquire the status information of the energy storage unit and send the status information to the energy storage cloud server; and receive the intelligent management strategy sent by the energy storage cloud server.

The domain controller acquires the intelligent management strategy of non-energy storage unit through the energy storage cloud server, which is simple, efficient, safe and reliable, and improves the management efficiency of the system.

In a possible implementation, the domain controller is configured to: acquire first status information of the energy storage unit, and send the first status information to the energy storage cloud server; receive a first instruction sent by the energy storage cloud server, acquire second status information of the energy storage unit according to the first instruction, and send the second status information to the energy storage cloud server, wherein the second status information comprises more information than the first status information, and the second status information is operable by the energy storage cloud server to determine the intelligent management strategy; and receive the intelligent management strategy sent by the energy storage cloud server.

The domain controller acquires the first status information of the energy storage unit and sends the first status information to the energy storage cloud server, and then acquires the second status information of the energy storage unit according to the first instruction sent by the energy storage cloud server and sends the second status information to the energy storage cloud server. The energy storage cloud server finally determines the intelligent management strategy of the non-energy storage unit by acquiring the first status information and the second status information. The domain controller acquires the intelligent management strategy from the energy storage cloud server and manages the non-energy storage unit according to the intelligent management strategy, in order to allow the non-energy storage unit to adjust the operating condition of the energy storage unit to the desired operating condition.

In a possible implementation, the domain controller is configured to: determine the intelligent management strategy of the non-energy storage unit according to the status information of the energy storage unit.

The domain controller determines the intelligent management strategy of the non-energy storage unit according to the status information of the energy storage unit, and the domain controller itself can determine the intelligent management strategy of the non-energy storage unit without information interaction and data calculation through other processing units, thus reducing information interaction and saving system resources.

In a possible implementation mode, the intelligent management strategy comprises: starting the non-energy storage unit to adjust an operating condition of the energy storage unit before the energy storage unit starts an operating mode, so that the energy storage unit is in a preset operating condition when the operating mode is started.

Before the energy storage unit starts the operating mode, the non-energy storage unit is started to adjust operating condition of the energy storage unit, so that the energy storage unit is in a preset operating condition when the operating mode is started. This allows the energy storage unit to be in the right operating conditions when it first starts working and enhances the efficiency of the energy storage unit.

In a second aspect, an energy storage system is provided, which includes an energy storage unit; a non-energy storage unit for assisting the energy storage unit; and a domain controller integrates a management module of the energy storage unit and a management module of the non-energy storage unit for managing the energy storage unit and the non-energy storage unit.

In a possible implementation, the management module of the energy storage unit includes at least one of a battery management system (BMS), a power conversion system (PCS), and an energy management system (EMS).

In a possible implementation, the management module of the energy storage unit comprises a plurality of control nodes, and the domain controller integrates the plurality of control nodes.

In a possible implementation, the non-energy storage unit comprises a thermal management unit or a fire fighting unit.

In a possible implementation, the thermal management unit integrates a thermal management unit of the energy storage unit and a thermal management unit of the PCS.

In a possible implementation, the domain controller is configured to manage the non-energy storage unit according to status information of the energy storage unit.

In a possible implementation, the status information of the energy storage unit comprises at least one of a temperature, a voltage, a state of charge (SOC), a state of health (SOH), and a state of charging and discharging.

In a possible implementation mode, the domain controller is configured to: acquire an intelligent management strategy of the non-energy storage unit according to the status information of the energy storage unit; and manage the non-energy storage unit according to the intelligent management strategy.

In a possible implementation, the intelligent management strategy is a management strategy associated with user usage behavior of the energy storage unit.

In a possible implementation, the energy storage system further comprises an energy storage cloud server, and the domain controller is configured to: acquire the intelligent management strategy of the non-energy storage unit from the energy storage cloud server according to the status information of the energy storage unit.

In a possible implementation, the domain controller is configured to: acquire the status information of the energy storage unit and send the status information to the energy storage cloud server; and the energy storage cloud server is configured to determine the intelligent management strategy according to the status information and send the intelligent management strategy to the domain controller.

In a possible implementation mode, the energy storage cloud server is configured to: extract first user usage behavior data of the energy storage unit according to the status information; and determine the intelligent management strategy corresponding to the first user usage behavior data according to the first user usage behavior data.

The energy storage cloud server extracts the first user usage behavior data of the energy storage unit according to the status information, and determines the intelligent management strategy corresponding to the first user usage behavior data, so that the management strategy of the non-energy storage unit can be flexibly adjusted according to the status information of the energy storage unit.

In a possible implementation, the domain controller is configured to: acquire first status information of the energy storage unit, and send the first status information to the energy storage cloud server; the energy storage cloud server is configured to: send a first instruction to the domain controller according to the first status information, the first instruction being configured to instruct the domain controller to send second status information of the energy storage unit, wherein the second status information comprises more information than the first status information; the domain controller is further configured to: obtain the second status information of the energy storage unit according to the first instruction, and send the second status information to the energy storage cloud server; and the energy storage cloud server is further configured to determine the intelligent management strategy according to the second status information and send the intelligent management strategy to the domain controller.

In a possible implementation mode, the energy storage cloud server is configured to: extract second user usage behavior data of the energy storage unit according to the first status information; and send the first instruction to the domain controller in a case where the second user usage behavior data is determined to have application characteristics corresponding to the intelligent management strategy.

The energy storage cloud server firstly extracts the second user usage behavior data of the energy storage unit according to the first status information, and then sends a first instruction to the domain controller to instruct the domain controller to send the second status information of the energy storage unit under the condition that the second user usage behavior data has the application characteristic corresponding to the intelligent management strategy. The information included in the second status information is more than the information included in the first status information, so that the energy storage cloud server can determine the intelligent management strategy of the non-energy storage unit according to the second status information, and manage the non-energy storage unit according to the intelligent management strategy, in order to allow the non-energy storage unit to adjust the operating condition of the energy storage unit to the desired operating condition.

In a possible implementation, the domain controller is configured to: determine the intelligent management strategy of the non-energy storage unit according to the status information of the energy storage unit.

In a possible implementation mode, the intelligent management strategy comprises: starting the non-energy storage unit to adjust an operating condition of the energy storage unit before the energy storage unit starts an operating mode, so that the energy storage unit is in a preset operating condition when the operating mode is started.

In a third aspect, a control method of an energy storage system is provided, the energy storage system comprising an energy storage unit, a non-energy storage unit for assisting the energy storage unit, and a domain controller integrating a management module of the energy storage unit and a management module of the non-energy storage unit; and the method includes: the domain controller managing the energy storage unit and the non-energy storage unit.

In a possible implementation, the management module of the energy storage unit includes at least one of a battery management system (BMS), a power conversion system (PCS), and an energy management system (EMS).

In a possible implementation, the management module of the energy storage unit comprises a plurality of control nodes, and the domain controller integrates the plurality of control nodes.

In a possible implementation, the non-energy storage unit comprises a thermal management unit or a fire fighting unit.

In a possible implementation, the thermal management unit integrates a thermal management unit of the energy storage unit and a thermal management unit of the PCS.

In a possible implementation, the domain controller managing the energy storage unit and the non-energy storage unit comprises: the domain controller managing the non-energy storage unit according to the status information of the energy storage unit.

In a possible implementation, the status information of the energy storage unit comprises at least one of a temperature, a voltage, a state of charge (SOC), a state of health (SOH), and a state of charging and discharging.

In a possible implementation, the domain controller managing the non-energy storage unit according to status information of the energy storage unit, comprises: the domain controller acquiring an intelligent management strategy of the non-energy storage unit according to the status information of the energy storage unit; and the domain controller managing the non-energy storage unit according to the intelligent management strategy.

In a possible implementation, the intelligent management strategy is a management strategy associated with user usage behavior of the energy storage unit.

In a possible implementation, the energy storage system further comprises an energy storage cloud server, and the domain controller acquiring the intelligent management strategy of the non-energy storage unit according to the status information of the energy storage unit, comprises: the domain controller acquiring the intelligent management strategy of the non-energy storage unit from the energy storage cloud server according to the status information of the energy storage unit.

In a possible implementation, the domain controller acquiring the intelligent management strategy of the non-energy storage unit from the energy storage cloud server according to the status information of the energy storage unit, comprises: the domain controller acquiring the status information of the energy storage unit and sending the status information to the energy storage cloud server so that the energy storage cloud server determines the intelligent management strategy according to the status information and sends the intelligent management strategy to the domain controller.

In a possible implementation, the energy storage cloud server determining the intelligent management strategy according to the status information, comprises:
the energy storage cloud server extracting first user usage behavior data of the energy storage unit according to the status information, and determining the intelligent management strategy corresponding to the first user usage behavior data according to the first user usage behavior data.

In a possible implementation, the domain controller acquiring the intelligent management strategy of the non-energy storage unit from the energy storage cloud server according to the status information of the energy storage unit, comprises: the domain controller acquiring the first status information of the energy storage unit and sending the first status information to the energy storage cloud server so that the energy storage cloud server sends a first instruction to the domain controller according to the first status information, wherein the first instruction is configured to instruct the domain controller to send second status information of the energy storage unit, wherein the second status information comprises more information than the first status information; and the domain controller acquiring the second status information of the energy storage unit according to the first instruction, and sending the second status information to the energy storage cloud server, so that the energy storage cloud server determines the intelligent management strategy according to the second status information, and sends the intelligent management strategy to the domain controller.

In a possible implementation, the energy storage cloud server sending a first instruction to the domain controller according to the first status information, comprises: the energy storage cloud server extracting second user usage behavior data of the energy storage unit according to the first status information, and sending the first instruction to the domain controller in a case where the second user usage behavior data is determined to have application characteristics corresponding to the intelligent management strategy.

In a possible implementation, the domain controller acquiring the intelligent management strategy of the non-energy storage unit according to the status information of the energy storage unit, comprises: the domain controller determining the intelligent management strategy of the non-energy storage unit according to the status information of the energy storage unit.

In a possible implementation mode, the intelligent management strategy comprises: starting the non-energy storage unit to adjust an operating condition of the energy storage unit before the energy storage unit starts an operating mode, so that the energy storage unit is in a preset operating condition when the operating mode is started.

In the fourth aspect, a control device for an energy storage system is provided, which includes a processor and a memory, the memory is used for storing a computer program, the processor is used for calling the computer program to cause the device to implement the method described in the third aspect above or in any of the possible implementations of the third aspect.

In the fifth aspect, a readable storage medium is provided, the readable storage medium storing a computer program, the computer program, when being executed by a computing device, causes the computing device to implement the method described in the third aspect above or in any of the possible implementations of the third aspect.

The present application provides a domain controller which is used in an energy storage system. The domain controller integrates the management module of the energy storage unit and the management module of the non-energy storage unit. Compared with the existing solution in which the management module of the energy storage unit and the management module of the non-energy storage unit of the energy storage system are distributed, the solution in the present application of integrating the management module of the energy storage unit and the management module of the non-energy storage unit into the domain controller makes it possible to allow the domain controller to centrally control the management module of the energy storage unit and the management module of the non-energy storage unit, so that the information interaction between the management module of the energy storage unit and the management module of the non-energy storage unit is smooth and rapid, the system management efficiency is improved, and the information of the management module of the energy storage unit and the management module of the non-energy storage unit can be integrated and processed, thus avoiding the waste of system resources caused by multiple information processing.

### BRIEF DESCRIPTION OF DRAWINGS

In order to more clearly illustrate under the technical solutions in embodiments of the present application, the following will briefly introduce the drawings that are desired to be used in the description of the embodiments. Obviously, the drawings in the following description are merely some embodiments of the present application, from which other drawings may be obtained without exerting inventive effort by those ordinarily skilled in the art.
FIG. 1 is a schematic diagram of an energy storage system disclosed in an embodiment of the present application;
FIG. 2 is a schematic diagram of an energy storage system disclosed in an embodiment of the present application;
FIG. 3 is a schematic diagram of an energy storage system disclosed in an embodiment of the present application;
FIG. 4 is a schematic flow chart of a control method of an energy storage system disclosed in an embodiment of the present application;
FIG. 5 is a schematic flow chart of a control method of an energy storage system disclosed in an embodiment of the present application;
FIG. 6 is a schematic flow chart of a control method of an energy storage system disclosed in an embodiment of the present application;
FIG. 7 is a schematic flow chart of a control method of an energy storage system disclosed in an embodiment of the present application;
FIG. 8 is a schematic flow chart of a method for optimizing a thermal management strategy of peak cut application disclosed in an embodiment of the present application; and
FIG. 9 is a schematic diagram of a control device of an energy storage system disclosed in an embodiment of the present application.

### DESCRIPTION OF THE EMBODIMENTS

The following further describes the implementations of the present application in detail with reference to the accompanying drawings and embodiments. Detailed description of the following embodiments and accompanying drawings are configured to illustratively state the principles of the present application, but not to limit the scope of the present application, that is, the present application is not limited to the embodiments described.

In the description of the present application, it should be noted that, unless otherwise stated, "multiple" means more than two. The terms "up", "down", "left", "right", "inside", "outside" and the like indicate orientations or positional relationships for ease of description and simplification of the description only and are not intended to indicate or imply that the device or element in question must have a particular orientation, be constructed and operate in a particular orientation and therefore cannot be construed as limiting to the present application. In addition, the terms of "first", "second", "third" are for descriptive purposes only and cannot be construed as indicating or implying relative importance. "Perpendicular" is not vertical in the strict sense, but within the allowable range of errors. "Parallelism" is not parallel in the strict sense, but within the allowable range of errors.

The locative words appearing in the following description are all directions shown in the figure and are not intended to limit the specific structure of the present application. In the description of embodiments of the present application, it should be noted that the terms "install", "connect", "couple" and the like are to be understood in a broad sense, unless otherwise expressly specified and limited, for example, it may refer to a fixed connection, may also refer to a detachable connection, or may refer to an integral connection; which may refer to a direct connection or an indirect connection via an intermediate medium. For those ordinarily skilled in the art, the specific meanings of the above terms in the present application will be understood according to the specific circumstances.

The term "and/or" in the present application is simply a description of the association relationship of the associated objects, indicating that three relationships can exist, for example, A and/or B may indicate that A exists alone, A and B exist at the same time, and B exists alone. In addition, the character "/" in the present application generally means that the associated objects are in an "or" relationship.

Based on the national power reform and the large increase in the installed capacity of renewable energy generation, energy storage technology will play an important role in the five links of power system: generation, transmission, transformation, distribution and use. Battery energy storage system is widely used in new energy, smart grid, energy-saving technology and other fields.

Battery energy storage system is an essential part of distributed generation and micro grid system, which can achieve the functions of electric energy storage, peak cut, and stabilizing the fluctuation of new energy output. With the continuous development of energy storage technology and the strong support of batteries and new energy technologies from all over the world, large-scale battery energy storage system devices have been more and more developed and applied.

With the development of energy storage industry, the working efficiency, safety performance and cycle life of battery energy storage system are the focus of attention, and these performances of battery energy storage system are closely related to the management of battery energy storage system. Reasonable management of battery energy storage system can effectively improve the performance of battery energy storage system. Most of the existing management methods of battery energy storage system are decentralized management methods, that is, each unit or module of battery energy storage system is managed separately without integration, the information interaction between units or modules is not smooth, resulting in the information being delayed, and the overall situation of battery energy storage system cannot be acknowledged in time. The management of the battery energy storage system is deviated from the actual situation, which will lead to the performance degradation of battery energy storage system in the long run. Therefore, how to manage the battery energy storage system reasonably and improve the performance of the battery energy storage system is an urgent problem to be solved at present.

In view of this, the embodiments of the present application provide a domain controller for an energy storage system. The domain controller integrates the management module of the energy storage unit and the management module of the non-energy storage unit. Compared with the existing solution in which the management module of the energy storage unit and the management module of the non-energy storage unit of the energy storage system are distributed, the solution in the present application of integrating the management module of the energy storage unit and the management module of the non-energy storage unit into the domain controller makes it possible to allow the domain controller to centrally control the management module of the energy storage unit and the management module of the non-energy storage unit, so that the information interaction between the management module of the energy storage unit and the management module of the non-energy storage unit is smooth and rapid, the system management efficiency is improved, and the information of the management module of the energy storage unit and the management module of the non-energy storage unit can be integrated and processed, thus avoiding the waste of system resources caused by multiple information processing.

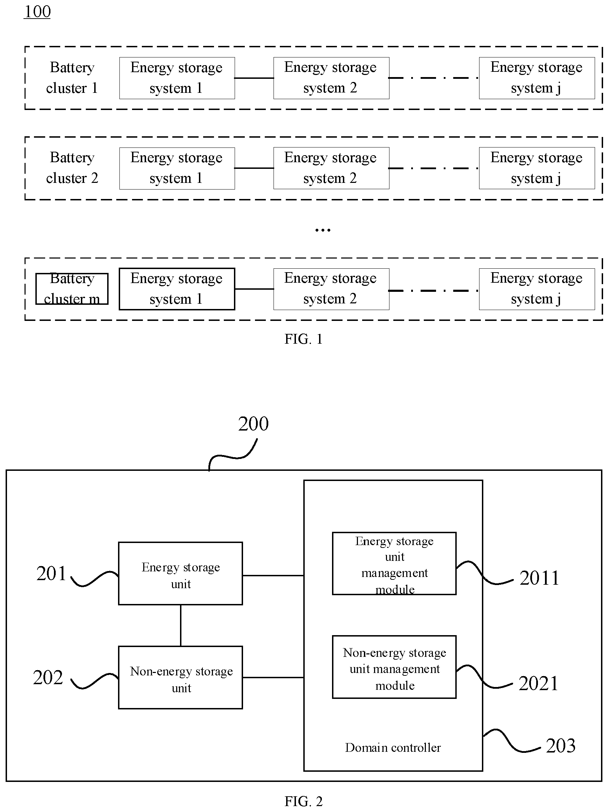

FIG. 1 is a schematic diagram of an energy storage system 100 provided in the present application.

The energy storage system 100 includes a plurality of battery clusters, such as a battery cluster 1 to a battery cluster m shown in FIG. 1, where m may be a natural number greater than 1, that is, the number of the battery clusters may be flexibly adjusted according to the energy storage capacity in practical applications, the number of battery clusters may be appropriately increased if the energy storage capacity is large, and the number of battery clusters may be appropriately reduced if the energy storage capacity is small.

Each battery cluster is composed of at least two battery energy storage systems (energy storage system, ESS) connected in series, such as the energy storage systems 1 to the energy storage system j in FIG. 1, where j can be a natural number greater than or equal to 2. Each energy storage system ESS is composed of several energy storage elements in series or in parallel to form the smallest energy storage and management unit. In order to achieve the detection and control of the energy storage system, a battery management system (BMS) is designed in each energy storage system and battery cluster to monitor the state of charge (SOC), temperature, current and other battery information of the battery, and interact with the upper energy management system (EMS) or the power conversion system (PCS) in real time to implement the management and control of the whole battery energy storage system.

The battery management system (BMS), the energy management system (EMS) and the power conversion system (PCS) of the above-mentioned energy storage system are usually designed in a decentralized manner in the energy storage system, and there are some problems such as delay of information interaction among the systems and poor communication.

The present application provides a domain controller for an energy storage system, and the energy storage system may be the energy storage system 100 of FIG. 1.

As shown in FIG. 2, the energy storage system 200 includes an energy storage unit 201 and a non-energy storage unit 202, the non-energy storage unit 202 is used for assisting the energy storage unit 201. The non-energy storage unit 202 may include, for example, a thermal management unit or a fire fighting unit, the thermal management unit can cool the battery pack of the energy storage unit 201 when the temperature of the battery pack is too high, and can heat the battery pack when the battery pack needs to be heated to improve the charging and discharging speed; and the fire fighting unit allows fire fighting in case of thermal runaway of the battery storage system.

The domain controller 203 integrates a management module 2011 of the energy storage unit 201 and a management module 2021 of the non-energy storage unit 202 for managing the energy storage unit 201 and the non-energy storage unit 202. The domain controller 203 integrates the management module 2011 of the energy storage unit 201 and the management module 2021 of the non-energy storage unit 201 together to form a "domain", and the management modules in the domain are connected by a communication line to realize centralized management. Since the management module 2011 of the energy storage unit 201 and the management module 2021 of the non-energy storage unit 202 are integrated together, the information interaction between the management modules is smooth and rapid, and the information of a plurality of management modules can be integrated and processed, thus avoiding the waste of system resources caused by multiple information processes.

In the embodiments of the present application, the management module 2011 of the energy storage unit 201 and the management module 2021 of the non-energy storage unit 202 are integrated into the domain controller 203. Compared with the existing solution in which the management module 2011 of the energy storage unit 201 and the management module 2021 of the non-energy storage unit 202 of the energy storage system 200 are distributed, the solution in the present application integrates the management module 2011 of the energy storage unit 201 and the management module 2021 of the non-energy storage unit 202 into the domain controller 203. The domain controller 203 can centrally control the management module 2011 of the energy storage unit 201 and the management module 2021 of the non-energy storage unit 202, so that the information interaction between the management module 2011 of the energy storage unit 201 and the management module 2021 of the non-energy storage unit 202 is smooth and rapid, the system management efficiency is improved, and the information of the management module 2011 of the energy storage unit 201 and the management module 2021 of the non-energy storage unit 202 can be integrated and processed, thus avoiding the waste of system resources caused by multiple information processing.

Alternatively, in the embodiments of the present application, the management module 2011 of the energy storage unit 201 includes at least one of a battery management system (BMS), a power conversion system (PCS), and an energy management system (EMS).

The battery management system (BMS) monitors the state of charge (SOC), temperature, current and other battery information of the battery, and interacts with the power conversion system (PCS) or the energy management system (EMS) to implement the management and control of the whole battery energy storage system. For example, the battery management system (BMS) ensures that the SOC is maintained within a reasonable range by estimating the state of charge (SOC) of the battery to prevent the damage to the battery due to overcharge or overdischarge. In the process of battery charging and discharging, the battery management system (BMS) collects the terminal voltage and temperature of each battery in the battery pack, the charging and discharging current and the total voltage of the battery pack in real time, so as to prevent the battery from overcharging or overdischarging, thus prolonging the service life of the battery.

It should be understood that the management module 2011 of the energy storage unit 201 described above is only an exemplary example and does not constitute a limitation to the present application. The management module 2011 of the energy storage unit 201 in the embodiments of the present application may include any of the management modules described above, but is not limited to the management modules described above.

Alternatively, in the embodiments of the present application, the management module 2011 of the energy storage unit 201 includes a plurality of control nodes, and the domain controller 203 can also integrate the plurality of control nodes of the management module 2011 of the energy storage unit 201, for example, integrate the control module, the display module and the wireless communication module of the battery management system (BMS), and integrate the information reception, information processing and information transmission of the battery management system (BMS) into a whole, so as to improve the speed of information interaction, improve the efficiency of information processing, avoid multi-layer information scattered transmission and save system resources.

The domain controller 203 integrates multiple control nodes of the management module 2011 of the energy storage unit 201, which can improve the integration level of the management module 2011 of the energy storage unit 201 and reduce the hardware cost.

Alternatively, in the embodiments of the present application, the thermal management unit integrates the thermal management unit of the energy storage unit 201 and the thermal management unit of the power conversion system (PCS). Thus, when the temperature of the power conversion system (PCS) is too high, the thermal management unit of the power conversion system (PCS) can transfer the heat of the power conversion system (PCS) to the thermal management unit of the battery. At the same time, the heat of the battery can also be transferred to the thermal management unit of the power conversion system (PCS) through the thermal management unit of the battery. Since the thermal management unit of the battery and the thermal management unit of the power conversion system (PCS) are integrated together, the energy transfer between the thermal management unit of the battery and the thermal management unit of the power conversion system (PCS) is centrally controlled by the domain controller 203, so that the energy transfer between the thermal management unit of the battery and the thermal management unit of the power conversion system (PCS) is timely and rapid.

The thermal management unit of the energy storage unit 201 and the thermal management unit of the PCS are integrated together, and energy conversion can be performed between the two thermal management units to improve the energy utilization rate of the system.

Alternatively, in the embodiments of the present application, the domain controller 203 is configured to manage the non-energy storage unit 202 according to the status information of the energy storage unit 201.

The domain controller 203 manages the non-energy storage unit 202 according to the status information of the energy storage unit 201 so that the non-energy storage unit 202 adjusts the operating condition of the energy storage unit 201 to a desired operating condition.

Further, in the embodiments of the present application, the domain controller 203 may acquire an intelligent management strategy of the non-energy storage unit 202 according to the status information of the energy storage unit 201 and manage the non-energy storage unit 202 according to the intelligent management strategy.

The domain controller 203 acquires the intelligent management strategy of the non-energy storage unit 202 according to the status information of the energy storage unit 201, so that the domain controller can adjust the management strategy of the non-energy storage unit 202 flexibly according to the status information of the energy storage unit 201, and manage the non-energy storage unit 202 according to the intelligent management strategy in order to allow the non-energy storage unit 202 to adjust the operating condition of the energy storage unit 201 to the desired operating condition.

Alternatively, in the embodiments of the present application, the intelligent management strategy is a management strategy associated with a user usage behavior of the energy storage unit 201.

The Intelligent management strategy is associated with the user usage behavior of energy storage unit 201, which can efficiently manage non-energy storage unit 202 and enable non-energy storage unit 202 to adjust the operating condition of the energy storage unit 201 to the required operating condition.

Alternatively, in the embodiments of the present application, the status information of the energy storage unit 201 includes at least one of temperature, voltage, state of charge (SOC), state of health (SOH), and state of charging and discharging.

The temperature of the battery is an important factor affecting the aging of the battery. Appropriate operating temperature can slow down the aging of the battery and give full play to the optimal performance of the battery. Therefore, it is necessary to monitor the temperature of the battery in real time to ensure that the battery is maintained at a suitable operating temperature.

The state of charge (SOC) of a battery is a physical quantity configured to reflect the remaining capacity of the battery, which represents the ratio of the remaining capacity of the battery after being used a period of time or not being used for a long time to the capacity in the fully charged state.

The state of health (SOH) of the battery is a quality factor compared with its ideal state. Usually, the state of health (SOH) of the battery decreases with the increase of service time and usage counts. Usually, the changes of electrical parameters such as internal resistance, capacity, voltage, self-discharge speed, charging ability and number of charge and discharge cycles are used to determine the state of health (SOH) of the battery.

It should be understood that the status information of the energy storage unit 201 described above is only an exemplary example and does not constitute a limitation to the present application, and the status information of the energy storage unit 201 in the embodiments of the present application may include the any of the status information described above, but is not limited to the status information described above.

The temperature, the voltage, the state of charge (SOC), the state of health (SOH) and the state of charging and discharging of the energy storage unit 201 are all status information related to the operating state of the energy storage unit 201. By acquiring these status information of the energy storage unit 201, the real-time operating conditions of the energy storage unit 201 can be controlled.

Alternatively, in the embodiments of the present application, the domain controller 203 is configured to determine the intelligent management strategy of the non-energy storage unit 202 according to the status information of the energy storage unit 201.

The domain controller 203 determines the intelligent management strategy of the non-energy storage unit 202 according to the status information of the energy storage unit 201, and the domain controller 203 itself can determine the intelligent management strategy of the non-energy storage unit 202 without information interaction and data calculation through other processing units, thus reducing information interaction and saving system resources.

It should be understood that after the domain controller 203 acquires the status information of the energy storage unit 201, the domain controller 203 may determine the intelligent management strategy of the non-energy storage unit 202 by itself according to the status information. It is also possible to send the status information to other processing units after acquiring the status information of the energy storage unit 201, determine the intelligent management strategy of the non-energy storage unit 202 by the other processing units according to the status information, and send the intelligent management strategy to the domain controller 203.

Alternatively, in the embodiments of the present application, the domain controller 203 is configured to acquire the intelligent management strategy of the non-energy storage unit 202 from the energy storage cloud server according to the status information of the energy storage unit 201.

The energy storage cloud server is simple, efficient, safe and reliable, and its processing capacity is flexible. The energy storage cloud server can store a large amount of information, and the information interaction of the energy storage system 200 through the energy storage cloud server is efficient and rapid, thus improving the management efficiency of the system.

Alternatively, in the embodiments of the present application, the domain controller 203 is configured to acquire status information of the energy storage unit 201 and send the status information to the energy storage cloud server; and receive the intelligent management strategy sent by the energy storage cloud server.

The domain controller 203 acquires the intelligent management strategy of non-energy storage unit 202 through the energy storage cloud server, which is simple, efficient, safe and reliable, and improves the management efficiency of the system.

It should be understood that the energy storage cloud server can conduct one analysis of the status information to determine the intelligent management strategy of the non-energy storage unit 202. After receiving the status information of the energy storage unit 201, a preliminary analysis can be carried out to determine whether the user usage behavior data has the application characteristics corresponding to the intelligent management strategy, and then a subsequent step can be carried out to determine the intelligent management strategy of the non-energy storage unit 202.

Alternatively, in the embodiments of the present application, the domain controller 203 is configured to: acquire the first status information of the energy storage unit 201 and transmit the first status information to the energy storage cloud server; receive a first instruction sent by the energy storage cloud server, acquire second status information of the energy storage unit 201 according to the first instruction, and send the second status information to the energy storage cloud server, wherein the second status information includes more information than the first status information, and the second status information is applied to the energy storage cloud server to determine an intelligent management strategy; and receive the intelligent management strategy sent by the energy storage cloud server.

The domain controller 203 acquires the first status information of the energy storage unit 201 and sends the first status information to the energy storage cloud server, and then acquires the second status information of the energy storage unit 201 according to the first instruction sent by the energy storage cloud server and sends the second status information to the energy storage cloud server. The energy storage cloud server finally determines the intelligent management strategy of the non-energy storage unit 202 by acquiring the first status information and the second status information. The domain controller 203 acquires the intelligent management strategy from the energy storage cloud server and manages the non-energy storage unit 202 according to the intelligent management strategy, to allow the non-energy storage unit 202 to adjust the operating condition of the energy storage unit 201 to the desired operating condition.

Alternatively, in the embodiments of the present application, the intelligent management strategy includes: starting the non-energy storage unit 202 to adjust an operating condition of the energy storage unit 201 before the energy storage unit 201 starts the operating mode, so that the energy storage unit is in a preset operating condition when the operating mode is started.

The preset operating condition described herein refers to an optimum operating condition or a better operating condition of the energy storage unit 201 determined from the historical operating state of the energy storage unit 201. The preset operating condition can be adjusted according to different states of the energy storage unit 201.

Before the energy storage unit 201 starts the operating mode, the non-energy storage unit 202 adjusts the operating condition of the energy storage unit 201, so that the energy storage unit 201 is in a preset operating condition when starting the operating mode. In this way, the energy storage unit 201 can be in suitable working conditions when it first starts working, and the efficiency of the energy storage unit 201 can be improved.

It should be understood that the above-described intelligent management strategy is only an exemplary example and does not constitute a limitation to the present application and that the intelligent management strategy in embodiments of the present application may include but is not limited thereto. For example, the intelligent management strategy in the embodiments of the present application may also include shutting down the non-energy storage unit 202 when the energy storage unit 201 stops working to save power consumption. In addition, during the operation of the energy storage unit 201, the status information of the energy storage unit 201 can be monitored in real time, and the intelligent management strategy of the non-energy storage unit 202 can be adjusted in time according to the status information, thus achieving efficient and energy-saving management of the energy storage system 200.

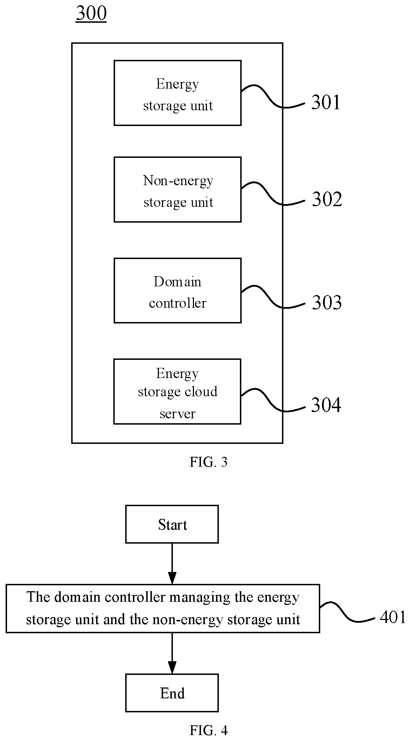

The present application also provides an energy storage system 300, as shown in FIG. 3, the energy storage system 300 includes an energy storage unit 301, a non-energy storage unit 302 and a domain controller 303.

The non-energy storage unit 302 is configured to assist the energy storage unit 301. For example, the operating temperature of the energy storage unit 301 is adjusted according to the operating state of the energy storage unit 301 so that the energy storage unit 301 is at an appropriate operating temperature. The non-energy storage unit 302 may include, for example, a thermal management unit or a fire fighting unit, the thermal management unit can cool the battery pack of the energy storage unit 301 when the temperature of the battery pack is too high, and can heat the battery pack when the battery pack needs to be heated to improve the charging and discharging speed; and the fire fighting system allows fire fighting in case of thermal runaway of the battery storage system.

The domain controller 303 integrates a management module of the energy storage unit 301 and a management module of the non-energy storage unit 302 for managing the energy storage unit 301 and the non-energy storage unit 302.

In the embodiments of the present application, the management module of the energy storage unit 301 and the management module of the non-energy storage unit 302 are integrated into the domain controller 303. Compared with the existing solution in which the management module of the energy storage unit 301 and the management module of the non-energy storage unit 302 of the energy storage system 300 are distributed, the solution in the present application integrates the management module of the energy storage unit 301 and the management module of the non-energy storage unit 302 into the domain controller 303. The domain controller 303 can centrally control the management module of the energy storage unit 301 and the management module of the non-energy storage unit 302, so that the information interaction between the management module of the energy storage unit 301 and the management module of the non-energy storage unit 302 is smooth and rapid, the system management efficiency is improved, and the information of the management module of the energy storage unit 301 and the management module of the non-energy storage unit 302 can be integrated and processed, thus avoiding the waste of system resources caused by multiple information processing.

Alternatively, in the embodiments of the present application, the management module of the energy storage unit 301 includes at least one of a battery management system (BMS), a power conversion system (PCS), and an energy management system (EMS).

The battery management system (BMS) monitors the state of charge (SOC), temperature, current and other battery information of the battery, and interacts with the power conversion system (PCS) or the energy management system (EMS) to implement the management and control of the whole battery energy storage system. For example, the battery management system (BMS) ensures that the SOC is maintained within a reasonable range by estimating the state of charge (SOC) of the battery to prevent the damage to the battery due to overcharge or overdischarge. In the process of battery charging and discharging, the battery management system (BMS) collects the terminal voltage and temperature of each battery in the battery pack, the charging and discharging current and the total voltage of the battery pack in real time, so as to prevent the battery from overcharging or overdischarging, thus prolonging the service life of the battery.

It should be understood that the management module of the energy storage unit 301 described above is only an exemplary example and does not constitute a limitation to the present application. The management module of the energy storage unit 301 in the embodiments of the present application may include any of the management modules described above, but is not limited to the management modules described above.

Alternatively, in the embodiments of the present application, the management module of the energy storage unit 301 includes a plurality of control nodes, and the domain controller 303 can also integrate the plurality of control nodes of the management module of the energy storage unit 301, for example, integrate the control module, the display module and the wireless communication module of the battery management system (BMS), and integrate the information reception, information processing and information transmission of the battery management system (BMS) into a whole, so as to improve the speed of information interaction, improve the efficiency of information processing, avoid multi-layer information scattered transmission and save system resources.

The domain controller 303 integrates multiple control nodes of the management module of the energy storage unit 301, which can improve the integration level of the management module of the energy storage unit 301 and reduce the hardware cost.

Alternatively, in the embodiments of the present application, the thermal management unit integrates the thermal management unit of the energy storage unit 301 and the thermal management unit of the power conversion system (PCS). Thus, when the temperature of the power conversion system (PCS) is too high, the thermal management unit of the power conversion system (PCS) can transfer the heat of the power conversion system (PCS) to the thermal management unit of the battery. At the same time, the heat of the battery can also be transferred to the thermal management unit of the power conversion system (PCS) through the thermal management unit of the battery. Since the thermal management unit of the battery and the thermal management unit of the power conversion system (PCS) are integrated together, the energy transfer between the thermal management unit of the battery and the thermal management unit of the power conversion system (PCS) is centrally controlled by the domain controller 303, so that the energy transfer between the thermal management unit of the battery and the thermal management unit of the power conversion system (PCS) is timely and rapid.

The thermal management unit of the energy storage unit 301 and the thermal management unit of the PCS are integrated together, and energy conversion can be performed between the two thermal management units to improve the energy utilization rate of the system.

Alternatively, in the embodiments of the present application, the domain controller 303 is configured to manage the non-energy storage unit 302 according to the status information of the energy storage unit 301.

The domain controller 303 manages the non-energy storage unit 302 according to the status information of the energy storage unit 301 so that the non-energy storage unit 302 adjusts the operating condition of the energy storage unit 301 to a desired operating condition.

Further, in the embodiments of the present application, the domain controller 303 may acquire an intelligent management strategy of the non-energy storage unit 302 according to the status information of the energy storage unit 301 and manage the non-energy storage unit 302 according to the intelligent management strategy.

The domain controller 303 acquires the intelligent management strategy of the non-energy storage unit 302 according to the status information of the energy storage unit 301, so that the domain controller can adjust the management strategy of the non-energy storage unit 302 flexibly according to the status information of the energy storage unit 301, and manage the non-energy storage unit 302 according to the intelligent management strategy in order to allow the non-energy storage unit 302 to adjust the operating condition of the energy storage unit 301 to the desired operating condition.

Alternatively, in the embodiments of the present application, the intelligent management strategy is a management strategy associated with a user usage behavior of the energy storage unit 301.

The Intelligent management strategy is associated with the user usage behavior of energy storage unit 301, which can efficiently manage non-energy storage unit 302 and enable non-energy storage unit 302 to adjust the operating condition of the energy storage unit 301 to the required operating condition.

Alternatively, in the embodiments of the present application, the status information of the energy storage unit 301 includes at least one of temperature, voltage, state of charge (SOC), state of health (SOH), and state of charging and discharging.

The temperature of the battery is an important factor affecting the aging of the battery. Appropriate operating temperature can slow down the aging of the battery and give full play to the optimal performance of the battery. Therefore, it is necessary to monitor the temperature of the battery in real time to ensure that the battery is maintained at a suitable operating temperature.

The state of charge (SOC) of a battery is a physical quantity configured to reflect the remaining capacity of the battery, which represents the ratio of the remaining capacity of the battery after being used a period of time or not being used for a long time to the capacity in the fully charged state.

The state of health (SOH) of the battery is a quality factor compared with its ideal state. Usually, the state of health (SOH) of the battery decreases with the increase of service time and usage counts. Usually, the changes of electrical parameters such as internal resistance, capacity, voltage, self-discharge speed, charging ability and number of charge and discharge cycles are used to determine the state of health (SOH) of the battery.

It should be understood that the status information of the energy storage unit 301 described above is only an exemplary example and does not constitute a limitation to the present application, and the status information of the energy storage unit 301 in the embodiments of the present application may include the any of the status information described above, but is not limited to the status information described above.

The temperature, the voltage, the state of charge (SOC), the state of health (SOH) and the state of charging and discharging of the energy storage unit 301 are all status information related to the operating state of the energy storage unit 301. By acquiring these status information of the energy storage unit 301, the real-time operating conditions of the energy storage unit 301 can be controlled.

Alternatively, in the embodiments of the present application, the domain controller 303 is configured to determine the intelligent management strategy of the non-energy storage unit 302 according to the status information of the energy storage unit 301.

The domain controller 303 determines the intelligent management strategy of the non-energy storage unit 302 according to the status information of the energy storage unit 301, and the domain controller 303 itself can determine the intelligent management strategy of the non-energy storage unit 302 without information interaction and data calculation through other processing units, thus reducing information interaction and saving system resources.

It should be understood that after the domain controller 303 acquires the status information of the energy storage unit 301, the domain controller 303 may determine the intelligent management strategy of the non-energy storage unit 302 by itself according to the status information. It is also possible to send the status information to other processing units after acquiring the status information of the energy storage unit 301, determine the intelligent management strategy of the non-energy storage unit 302 by the other processing units according to the status information, and send the intelligent management strategy to the domain controller 303.

Alternatively, in the embodiments of the present application, the energy storage system 300 further includes an energy storage cloud server 304, and the domain controller 303 is configured to acquire an intelligent management strategy of the non-energy storage unit 302 from the energy storage cloud server 304 according to the status information of the energy storage unit 301.

The energy storage cloud server 304 is simple, efficient, safe and reliable, and its processing capacity is flexible. The energy storage cloud server 304 can store a large amount of information, and the information interaction of the energy storage system 300 through the energy storage cloud server 304 is efficient and rapid, thus improving the management efficiency of the system.

Alternatively, in the embodiments of the present application, the domain controller 303 is configured to: acquire status information of the energy storage unit 301 and send the status information to the energy storage cloud server 304; and the energy storage cloud server 304 is configured to determine an intelligent management strategy according to the status information and provide the intelligent management strategy to the domain controller 303.

The domain controller 303 acquires the intelligent management strategy of non-energy storage unit 302 through the energy storage cloud server 304, which is simple, efficient, safe and reliable, and improves the management efficiency of the system.

It should be understood that the energy storage cloud server 304 can conduct one analysis of the status information to determine the intelligent management strategy of the non-energy storage unit 302. After receiving the status information of the energy storage unit 301, a preliminary analysis can be carried out to determine whether the user usage behavior data has the application characteristics corresponding to the intelligent management strategy, and then a subsequent step can be carried out to determine the intelligent management strategy of the non-energy storage unit 302.

Alternatively, in the embodiments of the present application, the energy storage cloud server 304 is configured to: extract the first user usage behavior data of the energy storage unit 301 according to the status information; determine an intelligent management strategy corresponding to the first user usage behavior data according to the first user usage behavior data.

The energy storage cloud server 304 extracts the first user usage behavior data of the energy storage unit 301 according to the status information, and determines the intelligent management strategy corresponding to the first user usage behavior data, so that the management strategy of the non-energy storage unit 302 can be flexibly adjusted according to the status information of the energy storage unit 301.

Alternatively, in the embodiments of the present application, the domain controller 303 is configured to: acquire first status information of the energy storage unit 301 and send the first status information to the energy storage cloud server 304; the energy storage cloud server 304 is configured to: send a first instruction to the domain controller 303 according to the first status information, and the first instruction is configured to instruct the domain controller 303 to send second status information of the energy storage unit 301, wherein the second status information includes more information than the first status information; the domain controller 303 is further configured to: acquire the second status information of the energy storage unit 301 according to the first instruction, and send the second status information to the energy storage cloud server 304; and the energy storage cloud server 304 is further configured to determine an intelligent management strategy according to the second status information and send the intelligent management strategy to the domain controller 303.

The domain controller 303 acquires the first status information of the energy storage unit 301 and sends the first status information to the energy storage cloud server 304, and then acquires the second status information of the energy storage unit 301 according to the first instruction sent by the energy storage cloud server 304 and sends the second status information to the energy storage cloud server 304. The energy storage cloud server 304 finally determines the intelligent management strategy of the non-energy storage unit 302 by acquiring the first status information and the second status information. The domain controller 303 acquires the intelligent management strategy from the energy storage cloud server 304 and manages the non-energy storage unit 302 according to the intelligent management strategy, to allow the non-energy storage unit 302 to adjust the operating condition of the energy storage unit 301 to the desired operating condition.

Alternatively, in the embodiments of the present application, the energy storage cloud server 304 is configured to: extract second user usage behavior data of the energy storage unit 301 according to the first status information; send the first instruction to the domain controller 303 in a case where the second user usage behavior data is determined to have application characteristics corresponding to the intelligent management strategy.

The energy storage cloud server 304 firstly extracts the second user usage behavior data of the energy storage unit 301 according to the first status information, and then sends a first instruction to the domain controller 303 to instruct the domain controller 303 to send the second status information of the energy storage unit 301 under the condition that the second user usage behavior data has the application characteristic corresponding to the intelligent management strategy. The information included in the second status information is more than the information included in the first status information, so that the energy storage cloud server 304 can determine the intelligent management strategy of the non-energy storage unit 302 according to the second status information, and manage the non-energy storage unit 302 according to the intelligent management strategy, in order to allow the non-energy storage unit 302 to adjust the operating condition of the energy storage unit 301 to the desired operating condition.

Alternatively, in the embodiments of the present application, the intelligent management strategy includes: starting the non-energy storage unit 302 to adjust an operating condition of the energy storage unit 301 before the energy storage unit 301 starts the operating mode, so that the energy storage unit 301 is in a preset operating condition when the operating mode is started.

The preset operating condition described herein refers to an optimum operating condition or a better operating condition of the energy storage unit 301 determined from the historical operating state of the energy storage unit 301. The preset operating condition can be adjusted according to different states of the energy storage unit 301.

Before the energy storage unit 301 starts the operating mode, the non-energy storage unit 302 adjusts the operating condition of the energy storage unit 301, so that the energy storage unit 301 is in a preset operating condition when starting the operating mode. In this way, the energy storage unit 301 can be in suitable working conditions when it first starts working, and the efficiency of the energy storage unit 301 can be improved.

It should be understood that the above-described intelligent management strategy is only an exemplary example and does not constitute a limitation to the present application and that the intelligent management strategy in embodiments of the present application may include but is not limited thereto. For example, the intelligent management strategy in the embodiments of the present application may also include shutting down the non-energy storage unit 302 when the energy storage unit 301 stops working to save power consumption. In addition, during the operation of the energy storage unit 301, the status information of the energy storage unit 301 can be monitored in real time, and the intelligent management strategy of the non-energy storage unit 302 can be adjusted in time according to the status information, thus achieving efficient and energy-saving management of the energy storage system 300.

It should be understood that in the embodiments of the present application, the domain controller 303 acquires the intelligent management strategy of the non-energy storage unit 302 according to the status information of the energy storage unit 301, and manages the non-energy storage unit 302 according to the intelligent management strategy, so that the non-energy storage unit 302 can flexibly and efficiently assist the energy storage unit 301 and make the energy storage unit 301 in a suitable operating condition, that is, the strategy of the non-energy storage unit 302 is adjusted flexibly according to the status information of the energy storage unit 301, to assist the energy storage unit 301 to reach a suitable operating condition, avoid unnecessary energy waste, and realize efficient energy-saving management of the energy storage system 300.

The energy storage system of the embodiments of the present application has been described above, and the control method of the energy storage system of the embodiments of the present application is described below where parts not described in detail can be referred to the preceding embodiments.

FIG. 4 is a schematic flow chart of a control method of an energy storage system disclosed in an embodiment of the present application.

At step 401, the domain controller manages the energy storage unit and the non-energy storage unit.

Alternatively, in the embodiments of the present application, the domain controller may manage the non-energy storage unit according to status information of the energy storage unit. The status information of the energy storage unit may include at least one of a temperature, a voltage, a state of charge (SOC), a state of health (SOH), and a state of charging and discharging. The temperature, voltage, state of charge (SOC), state of health (SOH) and state of charging and discharging of the energy storage unit are all status information related to the operating state of the energy storage unit. By acquiring these status information of the energy storage unit, it is possible to master the real-time operating conditions of the energy storage unit.

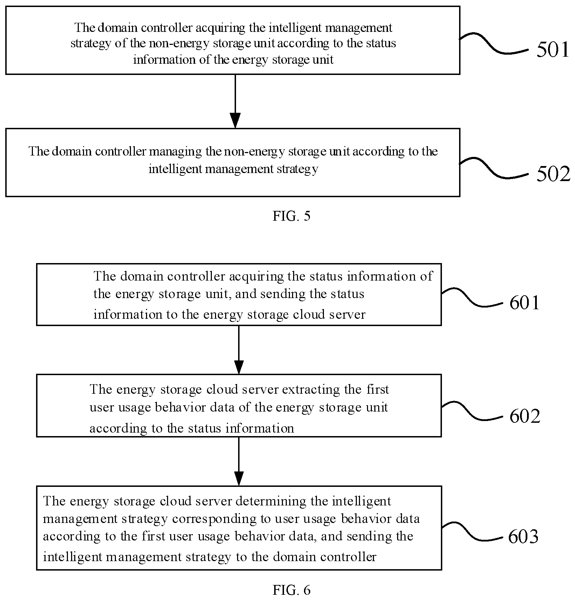

FIG. 5 is a schematic flow chart of a control method of an energy storage system disclosed in yet another embodiment of the present application.

At step 501, the domain controller acquires an intelligent management strategy of the non-energy storage unit according to the status information of the energy storage unit.

At step 502, the domain controller manages the non-energy storage unit according to the intelligent management strategy.

Alternatively, in the embodiments of the present application, the domain controller, after acquiring the status information of the energy storage unit, can determine the intelligent management strategy of the non-energy storage unit itself according to the status information.

Alternatively, in the embodiments of the present application, the energy storage system further comprises an energy storage cloud server. The domain controller, after acquiring the status information of the energy storage unit, sends the status information to the energy storage cloud server, and the energy storage cloud server determines the intelligent management strategy of the non-energy storage unit according to the status information, and sends the intelligent management strategy to the domain controller. Referring to FIG. 6, FIG. 6 is a schematic flowchart of a control method of an energy storage system disclosed in the embodiments of the present application.

At step 601, the domain controller acquires the status information of the energy storage unit, and sends the status information to the energy storage cloud server.

At step 602, the energy storage cloud server extracts the first user usage behavior data of the energy storage unit according to the status information.

At step 603, the energy storage cloud server determines the intelligent management strategy corresponding to user usage behavior data according to the first user usage behavior data, and sends the intelligent management strategy to the domain controller.

In the control method, the energy storage cloud server can extract the first user usage behavior data of the energy storage unit after receiving the status information of the energy storage unit, and determine the intelligent management strategy corresponding to the first user usage behavior data. That is to say, the energy storage cloud server only needs to analyze the status information once to determine the intelligent management strategy of non-energy storage unit.

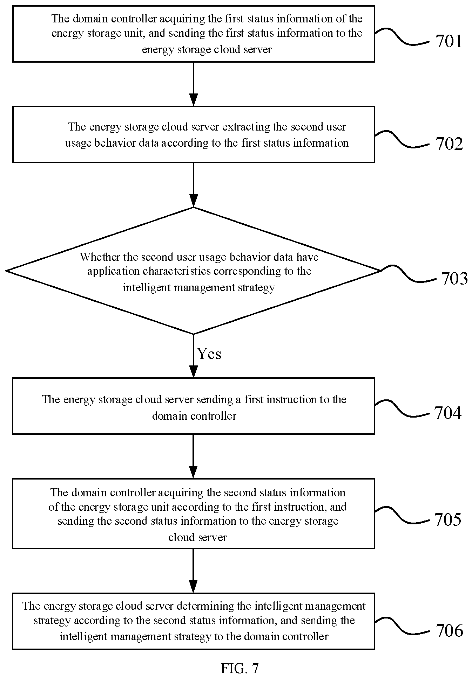

Alternatively, in an embodiment of the present application, after receiving the status information of the energy storage unit, the energy storage cloud server can first carry out preliminary analysis to determine whether the user use behavior data has application characteristics corresponding to the intelligent management strategy, and then carry out subsequent steps to determine the intelligent management strategy of the non-energy storage unit. Referring to FIG. 7, FIG. 7 is a schematic flowchart of a control method of an energy storage system disclosed in the embodiments of the present application.

At step 701, the domain controller acquires the first status information of the energy storage unit, and sends the first status information to the energy storage cloud server.

At step 702, the energy storage cloud server extracts the second user usage behavior data according to the first status information.

At step 703, the energy storage cloud server determines whether the second user usage behavior data have application characteristics corresponding to the intelligent management strategy.

At step 704, the storage cloud server sends a first instruction to the domain controller in a case where the second user usage behavior data have application characteristics corresponding to the intelligent management strategy.

At step 705, the domain controller acquires the second status information of the energy storage unit according to the first instruction, and sends the second status information to the energy storage cloud server.

At step 706, the energy storage cloud server determines the intelligent management strategy according to the second status information, and sends the intelligent management strategy to the domain controller.

The domain controller acquires the first status information of the energy storage unit and sends the first status information to the energy storage cloud server, and then acquires the second status information of the energy storage unit according to the first instruction sent by the energy storage cloud server and sends the second status information to the energy storage cloud server. The energy storage cloud server finally determines the intelligent management strategy of the non-energy storage unit by acquiring the first status information and the second status information. The domain controller acquires the intelligent management strategy from the energy storage cloud server and manages the non-energy storage unit according to the intelligent management strategy, in order to allow the non-energy storage unit to adjust the operating condition of the energy storage unit to the desired operating condition.

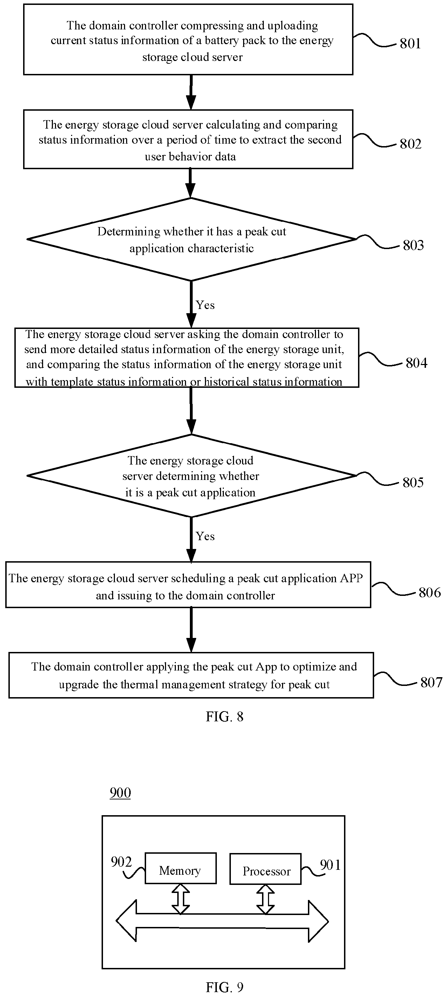

Below, the control method of the energy storage system provided by the embodiments of the present application is explained in combination with the specific application scenario of the battery energy storage system. As shown in FIG. 8, the explanation is made by taking the thermal management of the peak cut application of the distribution network as an example.

At step 801, the domain controller packs and compresses the status information such as battery pack temperature, state of charging and discharging, and compresses the current status information and uploads it to the energy storage cloud server.

Specifically, the domain controller can use wireless communication templates, such as 3G/4G/5G/ETH, to upload the status information of the battery pack to the energy storage cloud server.

At step 802, the energy storage cloud server calculates and compares the status information in a period of time according to the current status information, and preliminarily extracts the user usage behavior data.

At step 803, the energy storage cloud server determines whether there is an application characteristic of peak cut by determining whether the user usage behavior data has the regularity in time and space through comparison in time and space dimensions.

At step 804, when it is determined that there is application characteristic of peak cut, the energy storage cloud server asks the domain controller to send more detailed status information of the energy storage unit, to compare the status information with template status information or historical status information.

At step 805, the energy storage cloud server determines whether the status information has the application characteristic of the peak cut according to the detailed status information of the energy storage unit.

At step 806, after determining that the status information has the application characteristic of the peak cut, the energy storage cloud server dispatches the peak cut application APP and sends it to the domain controller.

Specifically, the energy storage cloud server can use wireless communication templates, such as 3G/4G/5G/ETH, etc., to send the peak cut application APP to the domain controller.

At step 807, the domain controller optimizes and upgrades the thermal management strategy of peak cut by using peak cut application APP.

In the method for optimizing the thermal management strategy under the peak cut application, the energy storage cloud server can determine the application characteristics and whether it belongs to the peak cut application according to the status information of the battery pack, and the domain controller can also determine the application characteristics and whether it belongs to the peak cut application according to the status information of the battery pack. The application characteristics of battery pack and whether it belongs to peak cut application are determined in combination with the determination of energy storage cloud server and domain controller.

The following example illustrates the specific thermal management strategy under the peak cut application. For example, if the battery pack starts charging at about 8:00 every day, before 8:00, the domain controller will turn on the thermal management unit of the battery pack to ensure that the temperature of the battery pack is adjusted to the optimal charging range at about 8:00, and its charging capacity will ensure that it can be charged to about 15:30. At the same time, during the charging process, according to the temperature change rate of the battery pack, the temperature window of the battery pack is adjusted to the optimal range at about 15:30 to ensure the discharge capacity between 15:30 and 20:00. After the discharge is completed, the thermal management unit of the battery pack will be turned off until 8:00 the next day.

In addition, during the execution of the peak cut application, the domain controller will still monitor the status information of the battery pack and upload to the energy storage cloud server in real time, and determine whether the peak cut application will continue to be implemented in the next time period, so as to continuously update the thermal management strategy of the thermal management unit and realize the intelligent adjustment of the energy storage system.

The embodiments of the present application also provide a control device 900 of the energy storage system. As shown in FIG. 9, the control device 900 includes a processor 901 and a memory 902, the memory 902 is configured to store a computer program, and the processor 901 is configured to call the computer program to enable the device to implement the methods of various embodiments of the present application.

The embodiments of the present application also provide a readable storage medium for storing a computer program that, when being executed by the computing device, causes the computing device to implement the aforementioned methods of various embodiments of the present application.

Although the present application has been described with reference to preferred embodiments, various modifications may be made thereto and components therein may be replaced with equivalents without departing from the scope of the present application. In particular, the various technical characteristics mentioned in the various embodiments may be combined in any manner so long as there is no structural conflict. The present application is not restricted to particular embodiments disclosed herein, but to comprise all technical solutions falling in the scope of the claims.

## Claims

1. A domain controller for an energy storage system, wherein the energy storage system comprises an energy storage unit and a non-energy storage unit, the non-energy storage unit being configured to assist the energy storage unit; and
the domain controller integrates a management module of the energy storage unit and a management module of the non-energy storage unit for managing the energy storage unit and the non-energy storage unit.

2. The domain controller according to claim 1, wherein the management module of the energy storage unit comprises at least one of a battery management system (BMS), a power conversion system (PCS), and an energy management system (EMS).

3. The domain controller according to claim 1 or 2, wherein the management module of the energy storage unit comprises a plurality of control nodes, and the domain controller integrates the plurality of control nodes.

4. The domain controller of any one of claims 1 to 3, wherein the non-energy storage unit comprises a thermal management unit or a fire fighting unit.

5. The domain controller according to claim 4, wherein the thermal management unit integrates a thermal management unit of the energy storage unit and a thermal management unit of the PCS.

6. The domain controller according to any one of claims 1 to 5, wherein the domain controller is configured to:
manage the non-energy storage unit according to status information of the energy storage unit.

7. The domain controller according to claim 6, wherein the status information of the energy storage unit comprises at least one of a temperature, a voltage, a state of charge (SOC), a state of health (SOH), and a state of charging and discharging.

8. The domain controller according to claim 6 or 7, wherein the domain controller is configured to:
acquire an intelligent management strategy of the non-energy storage unit according to the status information of the energy storage unit; and
manage the non-energy storage unit according to the intelligent management strategy.

9. The domain controller according to claim 8, wherein the intelligent management strategy is a management strategy associated with a user usage behavior of the energy storage unit.

10. The domain controller according to claim 8 or 9, wherein the domain controller is configured to:
acquire the intelligent management strategy of the non-energy storage unit from an energy storage cloud server according to the status information of the energy storage unit.

11. The domain controller according to claim 10, wherein the domain controller is configured to:
acquire the status information of the energy storage unit and send the status information to the energy storage cloud server; and
receive the intelligent management strategy sent by the energy storage cloud server.

12. The domain controller according to claim 10, wherein the domain controller is configured to:
acquire first status information of the energy storage unit, and send the first status information to the energy storage cloud server;
receive a first instruction sent by the energy storage cloud server, acquire second status information of the energy storage unit according to the first instruction, and send the second status information to the energy storage cloud server, wherein the second status information comprises more information than the first status information, and the second status information is operable by the energy storage cloud server to determine the intelligent management strategy; and
receive the intelligent management strategy sent by the energy storage cloud server.

13. The domain controller according to claim 8 or 9, wherein the domain controller is configured to:
determine the intelligent management strategy of the non-energy storage unit according to the status information of the energy storage unit.

14. The domain controller of any one of claims 8 to 13, wherein the intelligent management strategy comprises:
starting the non-energy storage unit to adjust an operating condition of the energy storage unit before the energy storage unit starts an operating mode, so that the energy storage unit is in a preset operating condition when the operating mode is started.

15. An energy storage system, comprising:
an energy storage unit;
a non-energy storage unit configured to assist the energy storage unit; and
a domain controller integrating a management module of the energy storage unit and a management module of the non-energy storage unit for managing the energy storage unit and the non-energy storage unit.

16. The energy storage system according to claim 15, wherein the management module of the energy storage unit comprises at least one of a battery management system (BMS), a power conversion system (PCS), and an energy management system (EMS).

17. The energy storage system according to claim 15 or 16, wherein the management module of the energy storage unit comprises a plurality of control nodes, and the domain controller integrates the plurality of control nodes.

18. The energy storage system according to claim 16 or 17, wherein the non-energy storage unit comprises a thermal management unit or a fire fighting unit.

19. The energy storage system according to claim 18, wherein the thermal management unit integrates a thermal management unit of the energy storage unit and a thermal management unit of the PCS.

20. The energy storage system of any one of claims 15 to 19, wherein the domain controller is configured to:
manage the non-energy storage unit according to status information of the energy storage unit.

21. The energy storage system according to claim 20, wherein the status information of the energy storage unit comprises at least one of a temperature, a voltage, a state of charge (SOC), a state of health (SOH), and a state of charging and discharging.

22. The energy storage system according to claim 20 or 21, wherein the domain controller is configured to:
acquire an intelligent management strategy of the non-energy storage unit according to the status information of the energy storage unit; and
manage the non-energy storage unit according to the intelligent management strategy.

23. The energy storage system according to claim 22, wherein the intelligent management strategy is a management strategy associated with a user usage behavior of the energy storage unit.

24. The energy storage system according to claim 22 or 23, wherein the energy storage system further comprises an energy storage cloud server, and the domain controller is configured to:
acquire the intelligent management strategy of the non-energy storage unit from the energy storage cloud server according to the status information of the energy storage unit.

25. The energy storage system according to claim 24, wherein the domain controller is configured to acquire the status information of the energy storage unit and send the status information to the energy storage cloud server; and
the energy storage cloud server is configured to determine the intelligent management strategy according to the status information and send the intelligent management strategy to the domain controller.

26. The energy storage system according to claim 25, wherein the energy storage cloud server is configured to:
extract first user usage behavior data of the energy storage unit according to the status information; and
determine the intelligent management strategy corresponding to the first user usage behavior data according to the first user usage behavior data.

27. The energy storage system according to claim 24, wherein the domain controller is configured to: acquire first status information of the energy storage unit and send the first status information to the energy storage cloud server;
the energy storage cloud server is configured to: send a first instruction to the domain controller according to the first status information, the first instruction being configured to instruct the domain controller to send second status information of the energy storage unit, wherein the second status information comprises more information than the first status information;
the domain controller is further configured to: obtain the second status information of the energy storage unit according to the first instruction, and send the second status information to the energy storage cloud server; and
the energy storage cloud server is further configured to determine the intelligent management strategy according to the second status information and send the intelligent management strategy to the domain controller.

28. The energy storage system according to claim 27, wherein the energy storage cloud server is configured to:
extract second user usage behavior data of the energy storage unit according to the first status information; and
send the first instruction to the domain controller in a case where the second user usage behavior data is determined to have application characteristics corresponding to the intelligent management strategy.

29. The energy storage system according to claim 22 or 23, wherein the domain controller is configured to:
determine the intelligent management strategy of the non-energy storage unit according to the status information of the energy storage unit.

30. The energy storage system of any one of claims 22 to 29, wherein the intelligent management strategy comprises:
starting the non-energy storage unit to adjust an operating condition of the energy storage unit before the energy storage unit starts an operating mode, so that the energy storage unit is in a preset operating condition when the operating mode is started.

31. A control method of an energy storage system, wherein the energy storage system comprises an energy storage unit, a non-energy storage unit for assisting the energy storage unit, and a domain controller integrating a management module of the energy storage unit and a management module of the non-energy storage unit; and
wherein the method comprises:
the domain controller managing the energy storage unit and the non-energy storage unit.

32. The control method according to claim 31, wherein the management module of the energy storage unit comprises at least one of a battery management system (BMS), a power conversion system (PCS), and an energy management system (EMS).

33. The control method according to claim 31 or 32, wherein the management module of the energy storage unit comprises a plurality of control nodes, and the domain controller integrates the plurality of control nodes.

34. The control method according to any one of claims 31 to 33, wherein the non-energy storage unit comprises a thermal management unit or a fire fighting unit.

35. The control method according to claim 34, wherein the thermal management unit integrates a thermal management unit of the energy storage unit and a thermal management unit of the PCS.

36. The control method of any one of claims 31 to 35, wherein the domain controller managing the energy storage unit and the non-energy storage unit comprises:
the domain controller managing the non-energy storage unit according to status information of the energy storage unit.

37. The control method according to claim 36, wherein the status information of the energy storage unit comprises at least one of a temperature, a voltage, a state of charge (SOC), a state of health (SOH), and a state of charging and discharging.

38. The control method according to claim 36 or 37, wherein the domain controller managing the non-energy storage unit according to status information of the energy storage unit, comprises:
the domain controller acquiring an intelligent management strategy of the non-energy storage unit according to the status information of the energy storage unit; and
the domain controller managing the non-energy storage unit according to the intelligent management strategy.

39. The control method according to claim 38, wherein the intelligent management strategy is a management strategy associated with a user usage behavior of the energy storage unit.

40. The control method according to claim 38 or 39, wherein the energy storage system further comprises an energy storage cloud server; and the domain controller acquiring an intelligent management strategy of the non-energy storage unit according to the status information of the energy storage unit comprises:
the domain controller acquiring the intelligent management strategy of the non-energy storage unit from the energy storage cloud server according to the status information of the energy storage unit.

41. The control method according to claim 40, wherein the domain controller acquiring the intelligent management strategy of the non-energy storage unit from the energy storage cloud server according to the status information of the energy storage unit, comprises:
the domain controller acquiring the status information of the energy storage unit and sending the status information to the energy storage cloud server so that the energy storage cloud server determines the intelligent management strategy according to the status information and sends the intelligent management strategy to the domain controller.

42. The control method according to claim 41, wherein the energy storage cloud server determining the intelligent management strategy according to the status information, comprises:
the energy storage cloud server extracting first user usage behavior data of the energy storage unit according to the status information, and determining the intelligent management strategy corresponding to the first user usage behavior data according to the first user usage behavior data.

43. The control method according to claim 40, wherein the domain controller acquiring the intelligent management strategy of the non-energy storage unit from the energy storage cloud server according to the status information of the energy storage unit, comprises:
the domain controller acquiring the first status information of the energy storage unit and sending the first status information to the energy storage cloud server so that the energy storage cloud server sends a first instruction to the domain controller according to the first status information, wherein the first instruction is configured to instruct the domain controller to send second status information of the energy storage unit, wherein the second status information comprises more information than the first status information; and
the domain controller acquiring the second status information of the energy storage unit according to the first instruction, and sending the second status information to the energy storage cloud server, so that the energy storage cloud server determines the intelligent management strategy according to the second status information, and sends the intelligent management strategy to the domain controller.

44. The control method according to claim 43, wherein the energy storage cloud server sending a first instruction to the domain controller according to the first status information, comprises:
the energy storage cloud server extracting second user usage behavior data of the energy storage unit according to the first status information, and sending the first instruction to the domain controller in a case where the second user usage behavior data is determined to have application characteristics corresponding to the intelligent management strategy.

45. The control method according to claim 38 or 39, wherein the domain controller acquiring an intelligent management strategy of the non-energy storage unit according to the status information of the energy storage unit, comprises:
the domain controller determining the intelligent management strategy of the non-energy storage unit according to the status information of the energy storage unit.

46. The control method according to any one of claims 31 to 45, wherein the intelligent management strategy comprises:
starting the non-energy storage unit to adjust an operating condition of the energy storage unit before the energy storage unit starts an operating mode, so that the energy storage unit is in a preset operating condition when the operating mode is started.
